# EUROPEAN PATENT SPECIFICATION

(11) **EP 2 335 909 B1**
(45) Date of publication and mention of the grant of the patent: **29.10.2014**
(21) Application number: 10007521.7
(22) Date of filing: 20.07.2010
(51) Int. Cl.: B29C 70/48, B29C 70/54, B29C 33/00, B29L 31/00, B29L 31/08

(54) **Mould and method for manufacturing a blade**
Vorrichtung und Verfahren für den Aufbau einer Schaufel
Moule et procédé de fabrication d'une pale

(30) Priority: 18.12.2009 EP 09015734
(43) Date of publication of application: 22.06.2011
(73) Proprietor: Siemens Aktiengesellschaft, 80333 München (DE)
(72) Inventor: Schibsbye, Karsten, 7000 Fredericia (DK)

(56) References cited:
- EP-A1- 2 106 900
- DE-C1- 19 922 850
- US-A1- 2002 155 186
- US-A1- 2007 063 393

## Description

The invention relates to a mould for building up a blade, to an arrangement to build up a blade and to a method for manufacturing a blade. Preferably the invention is used to build up a wind turbine blade.

Documents WO 2006/058540 A1, WO 2006/058541 A1 and document EP 1310351 A1 disclose some methods to manufacture or build up a blade. The blade is built up by fibre-reinforced laminated structures. The fibre-reinforced laminated structures are arranged in a mould-structure. Resin is injected into the mould-structure. For this purpose a distribution system is used. The fibre-reinforced laminates are impregnated/saturated by the resin. As the distribution system is located between the fibre-reinforced laminated structures it is left inside after the resin cured out.

The document US 2002/0155186 A1 discloses a process and apparatus for producing fibre reinforced resin structures using vacuum assisted resin transfer moulding technology. The FASTRAC process is described, which is a vacuum assisted resin transfer moulding type process that operates without the use of a traditional resin transfer medium which is in direct contact with the fibre preform. The fibre layers are covered with a primary vacuum bag that contains a resin port. A so called FASTRAC layer is placed onto the primary vacuum bag. The FASTRAC layer comprises a number of channels. By means of a secondary vacuum bag, which is placed onto the FASTRAC layer, the first vacuum bag is sucked into the spaces between the channels of the FASTRAC layer. This has the effect, that a number of fluid channels for guiding the resin are formed between the first vacuum bag and the fibres material.

In the document US 2007/0063393 A1 a vacuum assisted resin transfer moulding technique is disclosed, wherein a rigid external shell is mounted on top of the vacuum bag. The shell is sealed around the vacuum bag so that a vacuum is created between the shell and the vacuum bag. The vacuum causes the vacuum bag to be freely stretched and lifted away from the preform to create a flow channel on the top face of the preform to accelerate the resin flow and reduce the injection time. The method has some similarities to the so called FASTRAC process.

The document DE 199 22 850 C1 discloses an apparatus for producing an element made of fibre-reinforced laminate. The apparatus comprises two mould portions forming a cavity, wherein a fibre structure can be placed an in which resin can be injected by means of resin transfer moulding. One of the mould parts comprises a number of channels which run along the mould part and can be used for guiding the resin into the cavity.

Document EP 2 106 900 A1 discloses a mould and a method according to the preamble of claims 1 and 5, where the used distribution system is not inside the blade. The structure, which is used to build up the blade, shows two channels, which are located along the entire length of the mould. The channels are arranged on a surface of an actual volume, which surrounds the blade. The channels are part of another volume, which is used to apply vacuum to the blade. The channels are kept free of any material until the injection of resin starts. Thus the resin is allowed to run through the channels from an inlet port to a far end of the mould.

Document EP 1 310 351 A1 discloses a method, where resin is injected into flow pipes of a closed mould. The injection is controlled by a pressure difference.

These known methods show a common difficulty. It is extremely difficult to control the flow of resin within the laminated structure in a precise manner.

Especially the permeability of the laminated structure, such as glass fibre mats, may make up resistance to the flow of resin in order to being able to saturate the structure with resin. Consequently in areas with a high concentration of structure, the flow and saturation is limited.

Therefore it is a first objective of the present invention to provide an improved mould for building up a blade, especially a wind turbine blade. It is a second objective of the present invention to provide an improved method for manufacturing a blade, especially a wind turbine blade. It is a third objective of the present invention to provide an improved arrangement to build up a blade.

The first objective is solved by a mould for building up a blade as claimed in claim 1 and the second objective is solved by a method for manufacturing a blade as claimed in claim 5. The third objective is solved by an arrangement to build up a blade as claimed in claim 16. The depending claims define further developments of the present invention.

The inventive mould for building up a blade comprises an inner surface for supporting a number of layers forming the blade. The mould comprises at least one inlet for injecting a matrix material which penetrates the layers to build up the blade. The at least one inlet is integrated into the inner surface of the mould. Moreover, the mould may comprise at least one flow duct for guiding the injected matrix material.

Preferably, the at least one flow duct may be integrated into the inner surface of the mould.

The idea is to utilize the alternating permeability in a laminated structure, which is formed by the number of layers, by alternating the position of the inlet and/or flow duct of the matrix material. For example, the matrix material can be resin. The resin inlet can preferably be integrated in the mould as, for instance, a channel.

The mould comprises a first portion for supporting a number of layers with a total permeability for the matrix material p₁ and a second portion for supporting a number of layers with a total permeability for the matrix material p₂. The permeability p₂ is higher than the permeability p₁. The inlet and/or the flow duct is located at the first portion.

The major limitation in the injection of the resin is that a vacuum bag which may be placed onto the number of layers is not allowed to bulge, which happens when the resin pressure on the "inside" exceeds the atmospheric pressure on the "outside" of the bag. Therefore, according to the invention, the at least one resin inlet can be placed in areas with low permeability of the laminated structure or high flow resistance. The permeability of the laminated structure may be dependent on the thickness of the glass fibre structure, the "density" of the glass fibres in the glass fibre structure and other flow related parameters.

For example, the mould may comprise a first portion for supporting a number of layers with a total thickness d₁ and a second portion for supporting a number of layers with a total thickness d₂. The thickness d₁ may be higher than the thickness d₂. In this case, the inlet and/or the flow duct can preferably be located at the first portion.

Moreover, the mould may comprise a main beam portion for building up a main beam of the blade. At least one inlet and/or at least one flow duct may be located at the main beam portion.

Furthermore, the blade can comprise a root and a tip. The mould can comprise a root end corresponding to the root of the blade and a tip end corresponding to the tip of the blade. The inlet and/or the flow duct may be located at a position along the length from the root end to the tip end of the mould of between 0.25 and 0.5, preferably between 0.3 and 0.4, of the total blade length measured from the blade root.

The inventive method for manufacturing a blade comprises the steps of arranging a number of layers in a mould to form the blade and injecting matrix material into a laminated structure formed by the layers to build up the blade. The matrix material is injected through an inlet which is integrated into an inner surface of the mould. Advantageously, the injected matrix material is guided through a flow duct which is at least partly integrated into an inner surface of the mould.

The mould comprises a first portion for supporting a number of layers with a total permeability for the matrix material p₁ and a second portion for supporting a number of layers with a total permeability for the matrix material p₂. The permeability p₂ is higher than the permeability p₁. The injected matrix material is injected through an inlet which is located at the first portion. Additionally or alternatively the injected matrix material can advantageously be guided through a flow duct which is located at the first portion.

Since the permeability of the laminated structure may be dependent on the thickness of the glass fibre structure, the "density" of the glass fibres in the glass fibre structure and other flow related parameters, as previously mentioned, the mould can comprise a first portion for supporting a number of layers with a total thickness d₁ and a second portion for supporting a number of layers with a total thickness d₂. The thickness d₁ may be higher than the thickness d₂. In this case, the matrix material can preferably be injected through an inlet which is located at the first portion and/or the matrix material can be guided through a flow duct which is located at the first portion.

Furthermore, the mould may comprise a main beam portion for building up a main beam of the blade. The matrix material can be injected through an inlet which is located at the main beam portion and/or the matrix material can be guided through a flow duct which is located at the main beam portion.

Moreover, the blade may comprise a root and a tip. The mould may comprise a root end corresponding to the root of the blade and a tip end corresponding to the tip of the blade. The matrix material can advantageously be injected through an inlet at a position along the length from the root end to the tip end of the mould of between 0.25 and 0.5, preferably between 0.3 and 0.4, of the total blade length measured from the blade root. Additionally or alternatively, the matrix material may be injected in a flow duct at a position along the length from the root end to the tip end of the mould of between 0.25 and 0.5, preferably between 0.3 and 0.4, of the total blade length measured from the blade root. Advantageously, matrix material may be injected with a pressure higher than atmospheric pressure pₐₜₘ. For example, matrix material can be injected with a pressure between atmospheric pressure pₐₜₘ and a maximal pressure pₘₐₓ = Pₐₜₘ + Δp, where Δp is the pressure drop across the laminated structure formed by the number of layers.

Generally, the matrix material can be injected with a pressure depending on the local permeability of the laminated structure formed by the number of layers adjacent to the inlet and/or flow duct. For example, the mould may comprise a number of inlets and/or a number of flow ducts. The matrix material can be injected through each inlet and/or guided through each flow duct with an individual pressure depending on the local permeability of the laminated structure formed by the number of layers adjacent to the inlet and/or flow duct.

More concretely, the mould can comprise a first portion for supporting a number of layers with a total permeability for the matrix material p₁ and a second portion for supporting a number of layers with a total permeability for the matrix material p₂. The permeability p₂ may be higher than the permeability p₁. The matrix material can be injected with a first pressure a₁ through an inlet which is located at the first portion and matrix material can be injected with a second pressure a₂ through an inlet which is located at the second portion. The first pressure a₁ may advantageously be higher than the second pressure a₂.

The optimized positioning and high pressure resin inlet ensures an optimal - and sufficient - flow and saturation of resin in the glass fibre structure areas where only little flow is created and consequently no air entrapment is generated.

Even further the optimized positioning and high pressure resin inlet ensures that no auxiliary arrangements are to be established in order to ensure a sufficient saturation of the glass fibre in all areas. Auxiliary arrangements previously used could be e.g. additional resin flow channels integrated in the glass fibre, special type (easy flow) laminates integrated in the glass fibre structure or between the glass fibre mats etc.

Generally, the flow duct may comprise a lining.

The inventive mould and/or the inventive method may be used to build up a wind turbine rotor blade.

The inventive arrangement to build up a blade comprises a mould as previously described.

Generally, the inventive mould, method and arrangement are advantageous since an enhanced flow and saturation of resin in the laminated structure to be moulded can be achieved.

Moreover, the invention an arrangement can be provided to build up a blade. A first mould can be arranged to support a number of layers, while the layers are arranged to build up a three-dimensional shape of the blade. At least a second mould can be connected with the first mould, while the blade is arranged inside a cavity. The cavity can be formed by the connected moulds. The first and the second mould can be arranged and constructed in a way that injected matrix material penetrates the layers inside the cavity to build up the blade, while the matrix material cures. One of the moulds may contain at least one flow duct, which can be partly integrated into an inner surface of the mould. Thus the flow duct may be arranged into an inner surface of the cavity. The flow duct can be arranged and constructed to guide the injected matrix material.

Preferably a technical vacuum may be applied to at least one of the flow ducts to guide the matrix material (resin or liquid polymer). Thus a uniform and fast flow of the matrix material is ensured.

Preferably the technical vacuum is used additionally, to suck arranged blade-material (fibre mats or single fibres for example) to a certain part of the mould. Thus if the blade material is rolled onto the supporting mould, it is held in place due to the technical vacuum.

Preferably a reservoir is used to store and to provide matrix material to the moulds. Thus a sufficient amount of matrix material is ensured for the production of the blade.

Preferably a flow control valve is used to ensure that a certain amount of matrix material is provided to the moulds in a controlled way. Thus predefined levels of the matrix material into the cavity can be reached easily.

Preferably a stop cock is used to ensure that the flow of matrix material to the duct can be stopped if needed.

Preferably a number flow ducts, which are used to remove air from the cavity, is higher than a number of flow ducts, which are used to provide the matrix material into the cavity. Thus a uniform distribution of matrix material is achieved.

Preferably the flow duct contains a lining, which is used to guide the matrix material. The lining is constructed and arranged into the flow duct in a way that the lining is allowed to be removed after the production of the blade is finished.

Preferably the lining is constructed in a way that its structure is open throughout its length. Thus matrix material is allowed to flow from the lining to the blade-structure to penetrate the layers of the blade.

Preferably the lining contains openings along its length. Thus matrix material is allowed to flow from the lining to the blade-structure to penetrate the layers of the blade.

Due to this matrix material will flow along the lining and into the layers of the blade. If a sufficient amount of matrix material has penetrated the layers, the injection is stopped and the matrix material will harden to finish the blade-production process.

The removable lining prevents contacts between the matrix material and the used moulds. Thus only little additional efforts are needed to clean and to prepare the moulds for a new moulding process.

Preferably the lining is made of a flexible material like silicone. Thus the lining can be released from the hardened matrix material quite easily. Due to this the lining can be re-used.

Preferably the lining is pre-processed with silicone oil, grease, etc. before it is used for a moulding process.

Preferably the lining is made of a non-flexible material like PVC or wood. Thus a cheep material is used; therefore there is no demand for a re-use of the lining. The blade production is faster as the lining is disposed after its use; no further pre-processing of the lining is needed.

Preferably the flow duct is constructed and/or prepared in a way that the lining can be arranged into the flow duct very easily. For example easy-slip surfaces or applied agents like silicone oil is used. Thus the lining is allowed to slip easily from the flow duct when the blade production process is finished and the cavity is opened.

By the use of an easy-slip surface it is ensured that the lining and the mould do not stick together. Thus the process of removing the mould from the blade is easier.

Preferably the open lining is constructed and prepared in a way that it shows an easy-slip surface. This may be achieved by an agent, which is applied to the lining.

Preferably one portion of the open lining is flush with the surface of the mould in the enclosed space. Hereby it is ensured that the lining does not influence the surface structure and form of the composite material in the mould.

Due to the flow ducts surplus matrix material will be arranged along the lining of the flow ducts. If the cavity is opened (by removing one of the moulds) the surplus matrix material will be arranged at the surface of the blade. The surplus matrix material is connected with the blade.

For an optimized blade-surface this surplus matrix material often needs to be removed.

Preferably the lining has a section or portion, which limits the passage-area between the flow duct and the cavity. Thus the amount of matrix material is controlled in its flow from the flow duct / lining into the fibre reinforced laminated structure of the blade.

The section is constructed and arranged in a way that surplus matrix material, which extends over the surface of the blade, can be removed easily. For example a predefined breaking edge is defined by the section.

For example, the flow duct can be constructed as a recess and/or the flow duct can extend along the mould. Furthermore, the flow duct can be located at the leading edge and/or at the trailing edge of the blade.

A first distribution system may be connected with a number of flow ducts, while the flow ducts are used to evacuate air from the cavity. The first distribution system can be constructed and arranged in a way that a technical vacuum is applied to the cavity. Moreover, a second distribution system can be connected with a number of flow ducts, while the flow ducts are arranged to inject the matrix material.
The second distribution system may be constructed and arranged in a way that due to the technical vacuum and/or due to an applied pressure the matrix material is injected into the cavity. A reservoir with matrix material can be connected with the flow ducts of the second distribution system. The matrix material can be injected by an applied pressure in the flow ducts of the second distribution system.

At least one flow duct can be connected with a valve, while the valve is constructed and arranged in a way that the pressure of the matrix material is controlled.

At least one flow duct may be connected with a cock, while the cock is constructed and arranged in a way that the pressure of the matrix material is controlled.

The number of flow ducts, which are connected with the first distribution system, can exceed the number of flow ducts, which are connected with the second distribution system.

Furthermore, the flow duct may contain a lining, which is constructed and arranged into the flow duct in a way that matrix material is guided from the flow duct into the cavity and that the lining is removable out from the flow duct after the production of the blade is finished. The lining can be constructed in a way that its structure is open throughout its length or the lining may contain openings along its length. Thus matrix material is allowed to flow from the lining to the blade-structure to penetrate the layers of the blade.

The lining can contain a section, which is constructed in a way that it limits the passage-area between the flow duct and the cavity, and/or which defines a breaking edge, to allow removing of surplus matrix material, which extends over the surface of the blade.

The first mould and/or the second mould of the inventive arrangement may comprise a first portion for supporting the number of layers with a total permeability for the matrix material p₁ and a second portion for supporting the number of layers with a total permeability for the matrix material p₂. The permeability p₂ is preferably higher than the permeability p₁. In this case the flow duct may advantageously be located at the first portion of the mould. The permeability may be dependent on the thickness of the glass fibre structure, the "density" of the glass fibres in the glass fibre structure or other flow related parameters.

The first mould and/or the second mould can comprise a first portion for supporting a number of layers with a total thickness d₁ and a second portion for supporting a number of layers with a total thickness d₂. The thickness d₁ may be higher than the thickness d₂. In this case the flow duct may advantageously be located at the first portion of the mould.

The first mould and/or the second mould may comprise a main beam portion or shear web portion for building up a main beam or shear web of the blade. At least one flow duct can be located at the main beam portion or shear web portion.

For an exemplary embodiment the inlet channel is integrated in the mould and centred under the main beam or shear web. Typically the beam area comprises additional glass fibre material in order to ensure a sufficient transition between the blade "shell" and the beam.

The invention is advantageous in that the position of the matrix material, for example resin, inlet channel is optimized in relation to the flow properties of the casted material or structure. Advantageously, the inlet channel is positioned at blade structures comprising additional glass fibre material e.g. at the blade beam.

The optimized positioning ensures an optimal and sufficient flow and saturation of the matrix material (resin) in the glass fibre structure where no areas with no or only little flow are created and consequently no air entrapment occurs.

Even further the optimized positioning ensures that no auxiliary arrangements are to be established in order to ensure a sufficient saturation of the glass fibre in all areas. Auxiliary arrangements could be e.g. additional resin flow channels integrated in the glass fibre, special type laminates and/or nets integrated in the glass fibre structure or between the glass fibre mats etc.

The blade may comprise a root and a tip. The first mould and/or the second mould may comprise a root end corresponding to the root of the blade. Furthermore, the first mould and/or the second may comprise a tip end corresponding to the tip of the blade. An inlet in the flow duct may advantageously be located at a position along the length from the root end to the tip end of the first mould and/or the second mould of between 0.25 and 0.5 of the total blade length measured from the blade root. Preferably, the flow duct may be located at a position along the length from the root end to the tip end of the first mould and/or the second mould of between 0.3 and 0.4 of the total blade length measured from the blade root. This ensures that approximately half of the glass fibre material area is present on each side of the inlet point. This may in turn ensure a faster injection time. Especially if the inlet channel is centred under the main beam or shear web a faster injection time can be ensured, as the "operation length" from the inlet channel to an outlet is only "A/2", whereas a normal "operation length" is from blade "trail-to-leading edge" which a length of "A".

The inventive method for manufacturing a blade, for example a wind turbine rotor blade, can comprise the steps of: arranging a number of layers in a first mould to build up a three-dimensional shape of the blade, connecting at least a second mould with the first mould, while the blade is arranged inside a cavity, which is formed by the connected moulds, injecting matrix material inside the cavity which penetrates the layers to build up the blade, and guiding the injected matrix material through a flow duct which is partly integrated into an inner surface of the first mould and/or the second mould. The method has the same advantages as the previously described inventive arrangement. The inventive method can be performed by means of the inventive arrangement.

For example, the first mould and/or the second mould may comprise a first portion for supporting a number of layers with a total permeability for the matrix material p₁ and a second portion for supporting a number of layers with a total permeability for the matrix material p₂. The permeability p₂ is preferably higher than the permeability p₁. In this case the injected matrix material is preferably guided through a flow duct which is located at a first portion.

The first mould and/or the second mould can comprise a first portion for supporting a number of layers with a total thickness d₁ and a second portion for supporting a number of layers with a total thickness d₂. The thickness d₁ is preferably higher than the thickness d₂. In this case the injected matrix material is preferably guided through a flow duct which is located at the first portion.

The first mould and/or the second mould may comprise a main beam portion or a shear web portion for building up a main beam or shear web of the blade. The injected matrix material can be guided through a flow duct which is located at the main beam portion or shear web portion. This ensures a faster injection time and an enhanced flow and saturation of resin or other matrix material in the laminated structure to be moulded.

The flow duct/ducts may for other embodiments be located at other positions, e.g. transverse to the shear web portion.

Furthermore, the blade may comprise a root and a tip. The first mould and/or the second mould may comprise a root end corresponding to the root of the blade. Furthermore, the first mould and/or the second mould may comprise a tip end corresponding to the tip of the blade. The matrix material can be injected in the flow duct at a position along the length from the root end to the tip end of the first mould and/or the second mould of between 0,25 and 0,5, preferably between 0,3 and 0,4, of the total blade length measured from the blade root.

Generally, the matrix material can be injected with a pressure higher than atmospheric pressure pₐₜₘ. Advantageously, the matrix material is injected with a pressure between atmospheric pressure pₐₜₘ and a maximal pressure pₘₐₓ=pₐₜₘ+Δp. Δp is the pressure drop or pressure difference across the number of layers or laminated structure. For example, the outer side of the layers can be covered by a vacuum bag. On the outer side of the vacuum bag the pressure is atmospheric pressure (pₐₜₘ). The matrix material, for example resin, may be injected with an inlet pressure pᵢₙₗₑₜ in an inlet channel. Due to the "flow resistance" in the laminated structure comprising the layers a pressure drop across the structure will be present (Δp). It must be ensured that the vacuum bag does not lump due to a resin or matrix material pressure at the inside surface of the vacuum bag that is higher than Pₐₜₘ. Consequently the maximal inlet pressure of the resin or matrix material that can be applied is: P_{inlet,max}=Pₐₜₘ+ΔP which is a value higher than pₐₜₘ. This in turn ensures a higher inlet flow of resin or matrix material and therefore a shorter resin inlet time.

Generally, the blade can be a wind turbine rotor blade.

Further features, properties and advantages will become clear from the following description of embodiments in conjunction with the accompanying drawings. They show preferred configurations and do not limit the scope of the invention as claimed. All mentioned features are advantageous alone or in any combination with each other.
- FIG 1: shows the arrangement according to the invention in a schematically view,
- FIG 2: shows, in reference to FIG 1, a preferred configuration of the invention,
- FIG 3: shows, in reference to FIG 1 and to FIG 2, the flow of the matrix material,
- FIG 4: shows a part of the blade, where surplus matrix material extends from the surface of the blade,
- FIG 5: shows in reference to FIG 1 a flow duct, which contains a lining according to the invention,
- FIG 6: shows a part of the blade, where surplus matrix material extends from the surface of the blade, if a lining is used according to the invention, and
- FIG 7: shows different cross sections of the lining, referring to FIG 6.
- FIG 8: schematically shows a wind turbine.
- FIG 9: shows a rotor blade in a plan view on the plane defined by the blade's span and the blade's chord.

- FIG 10: shows a chord-wise cross section through the rotor blade's airfoil section.
- FIG 11: schematically shows the resin flow from the inlet channel through the laminated structure in a sectional view.
- FIG 12: schematically shows part of the mould covered with a laminated structure and a vacuum bag in a sectional view.
- FIG 13: schematically shows an inventive closed mould arrangement in a sectional view.
- FIG 14: schematically shows a wind turbine rotor blade 15 in a sectional view along the plane defined by the blade's span and the blade's cord.
- FIG 15: schematically shows an advantageous positioning of the flow duct in part of a mould in a sectional view.
- FIG 16: schematically shows a positioning of flow ducts depending on the permeability of the laminated structure in part of a mould in a sectional view.
- FIG 17: schematically shows part of a flow duct equipped with a "full-body" lining in a sectional perspective view.
- FIG 18: schematically shows part of a flow duct equipped with a lining strip in a sectional perspective view.

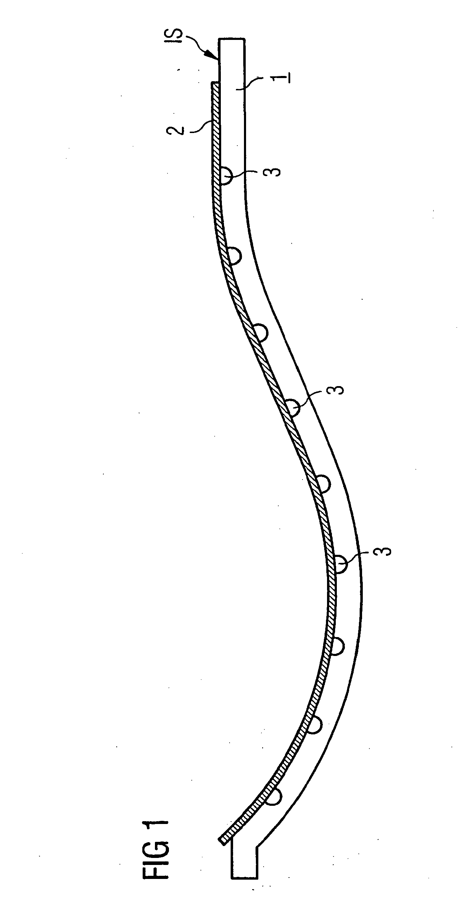

A first embodiment of the present invention will now be described with reference to figures 1 to 7. FIG 1 shows the arrangement according to the invention. A bottom part of a mould 1 is used to support a number of layers 2, which are piled like a sandwich. The layers 2 are piled in a way that the three-dimensional shape (3D-shape) of the blade is achieved.

The piled layers may contain fibre-reinforced laminates and/or balsa wood and/or composite material and/or other useful materials. The layers are arranged and formed in a way that they are connected by an injected matrix material. Matrix material may contain resin, glue or any other kind of "connecting" material.

After the 3D-shape of the blade is finished by the stacked layers, a top mould is connected with the bottom mould. Thus a cavity is built by the two moulds, which contains the blade. Later resin is injected into the cavity to combine the layers of the blade. For this injection pressure or a technical vacuum is applied to the mould-system.

According to the invention at least one mould 1 contains at least one flow duct 3. The flow duct 3 is only partly integrated into the inner surface IS of the mould 1.

After the mould 1 is connected with at least another mould as described above the technical vacuum or the pressure is applied to the flow duct 3. Accordingly the flow duct 3 is used to inject a matrix material, like resin or a liquid polymer, into the closed mould-system.

Preferably each used flow duct 3 extends along the entire length of the mould 1.

Preferably some of the used flow ducts 3 are arranged to be used as an injection duct. This allows matrix material like resin to be injected into this flow ducts. Preferably some of the used flow ducts 3 are arranged to be used as a drain duct. Thus surplus matrix material is allowed to leave the mould system if needed.

The layers of the used fibre reinforced laminated material is laid out manually or automatically in a way that a desired composite structure is achieved.

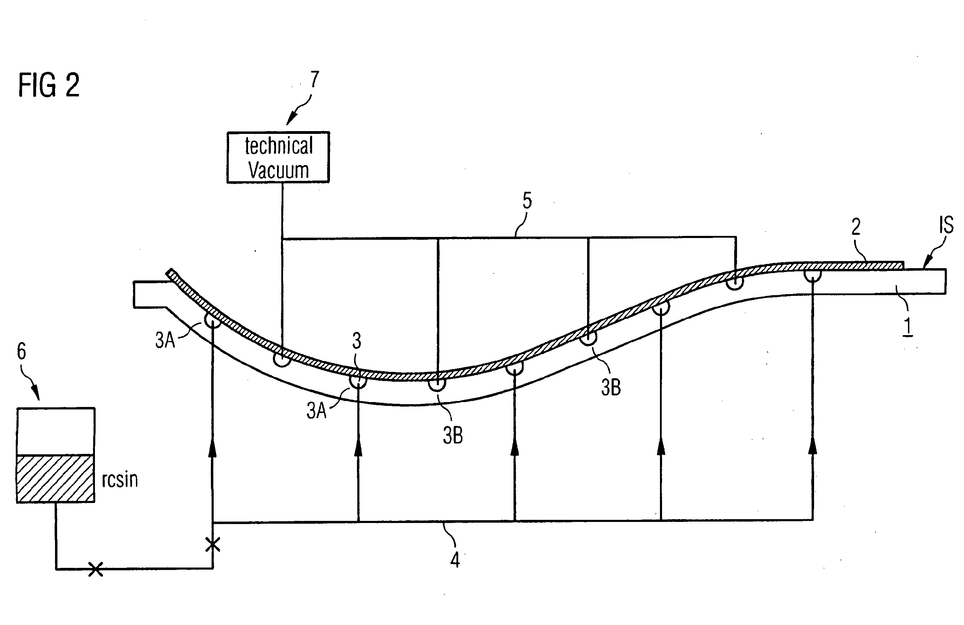

FIG 2 shows, in reference to FIG 1, a preferred configuration of the invention. As described above resin is applied to a number of first flow ducts 3A, while a technical vacuum is applied to a number of second flow ducts 3B. The flow ducts 3A are part of a vacuum or a pressure distribution system 5. The flow ducts 3B are part of a matrix material or resin distribution system 4.

The distribution system 5 preferably contains various components like one or more vacuum units (not shown here). These vacuum units are used to generate the technical vacuum or they are used to generate low pressure. The distribution system 5 may also contain flexible hoses, pipes, couplings and seals to ensure that the distribution system is tight.

The distribution system 5 preferably is built up in a way that its reconfiguration is allowed. The reconfiguration may be done in dependency of certain system-requirements or in dependency of fault parts within the distribution system 5.

Preferably the flow ducts 3A, 3B are partly integrated in the mould 1. For example they are partly integrated tubes.

Preferably the technical vacuum or the low pressure is controlled by an applied open-loop control or by an applied closed-loop control. For this purpose the pressure (or pressure differences) is measured within the flow ducts 3A and/or within the flow ducts 3B. Preferably the pressure is controlled during the matrix material is injected.

Preferably the distribution system 5 is connected to one flow duct, while this flow duct is located substantially at the leading edge or at the trailing edge of the blade.

Preferably the distribution system 4 of the matrix material / resin contains a reservoir 6. Preferably the distribution system 4 contains one or more reservoirs 6, flexible hoses, pipes, couplings and/or seals. These components are arranged to ensure tight connections.

Preferably the matrix material is injected into the distribution system 4 by an applied pressure. Thus an increased pressure difference between the flow ducts 3A, where the matrix material is injected, and the flow ducts 3B, where surplus matrix material may leave the mould system is established. Thus an even higher flow rate is established.

Preferably the distribution system 4 and/or the distribution system 5 contain a flow control valve. This valve is arranged in a way that the amount and the flow of the matrix material and/or the amount of evacuated air are/is measured for control-purposes.

Preferably the distribution system 4 and/or the distribution system 5 contain a stop cock. The cock is used to control the flow of the injected matrix material and/or the flow of the evacuated air. The flow is stopped for example if a sufficient amount of matrix material was injected or it is stopped if an error (like a leaking hose) is detected.

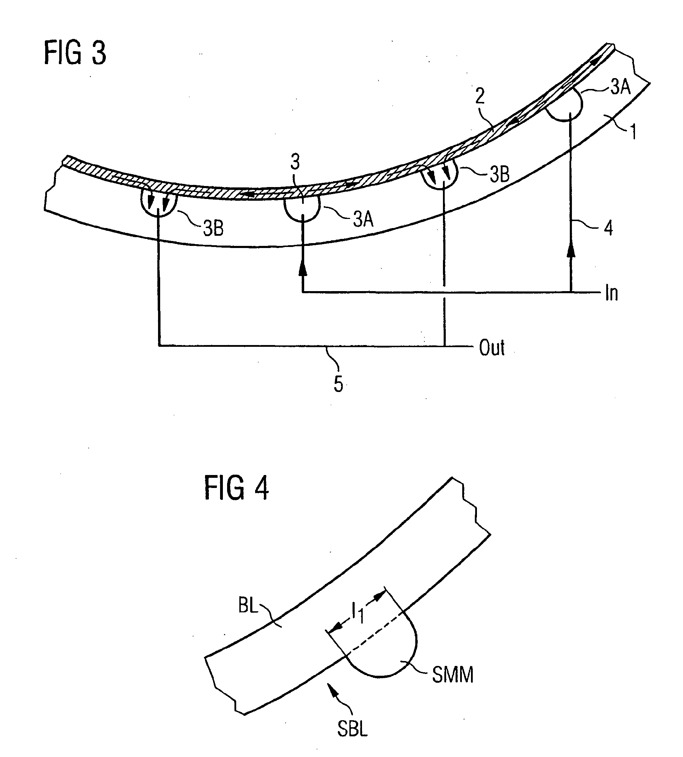

FIG 3 shows, in reference to FIG 1 and to FIG 2, the flow of the matrix material.

Whenever a blade, which contains components as described above, is manufactured the flow of the matrix material is of most importance. The matrix material needs to flow in a substantially free manner. Thus a uniform distribution of the matrix material is achieved in and between the used blade components.

Preferably the matrix material is injected via an inlet IN into the distribution system 4. Thus the matrix material is brought into a number of the flow ducts 3A.

The flow ducts 3 and their surface are constructed in a way that the matrix material is allowed to flow substantially free inside.

Furthermore the matrix material is injected into the piled layers 2 thus the blade-structure is permeated.

Surplus liquid polymer exits the blade-structure via a number of other flow ducts 3B - for example those flow ducts, which are part of the distribution system 5 being used to apply the technical vacuum.

FIG 4 shows a part of a blade BL, where surplus matrix material SMM extends from the surface SBL of the blade BL. This surplus matrix material SMM needs to be removed to optimize the surface SBL of the blade BL.

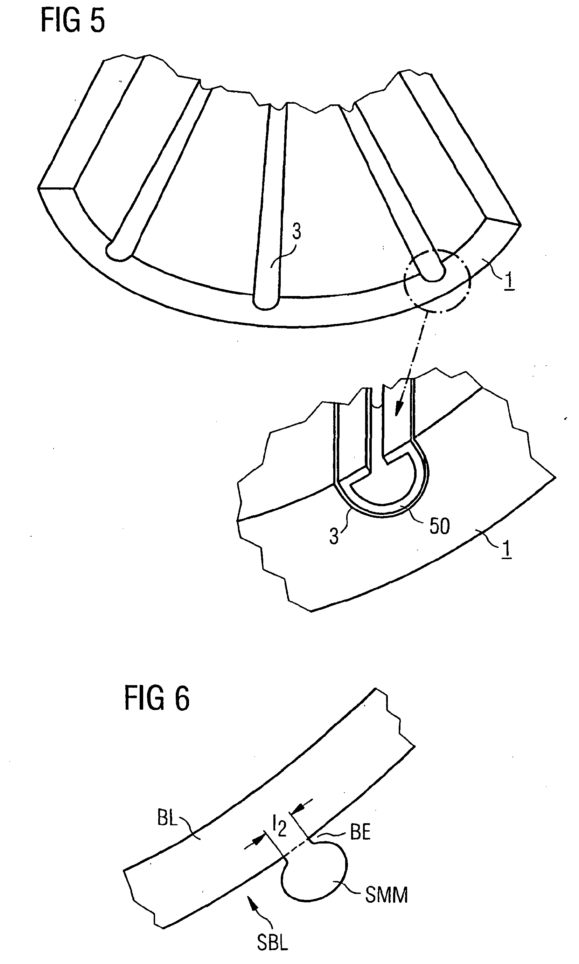

FIG 5 shows in reference to FIG 1 a flow duct 3, which contains a lining 50 according to the invention. The lining 50 is profiled and fits into the dedicated flow duct 3. Preferably the lining 50 does not extend above the flow duct 3 and the inner surface of the mould 1. So it does not influence the curvature of the fibre glass material laid down in the mould. When covered by fibre glass material, for example, the lining 50 forms an injection channel for matrix material like resin, as it forms a hollow profile.

During the blade-production-process resin is injected into the composite structure through this hollow profile and it is distributed along the extent of the lining 50. Thus a uniform distribution is obtained.

FIG 6 shows in reference to FIG 5 a part of the blade BL, where surplus matrix material SMM extends from the surface SBL of the blade BL, if a lining 50 is used according to the invention. Due to the cross-section of the lining 50 a predefined breaking edge BE is defined. This breaking edge BE allows removing of the surplus material SMM from the blade BL very easily.

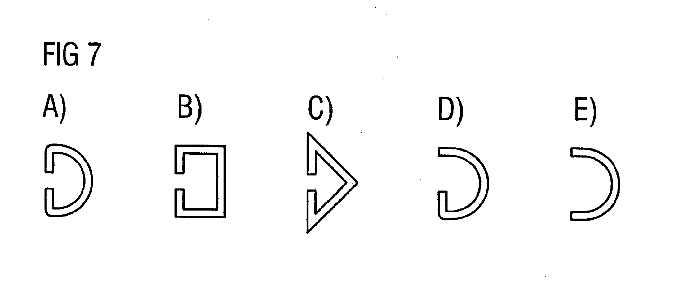

FIG 7 shows different cross sections of the lining, referring to FIG 5 and to FIG 6.

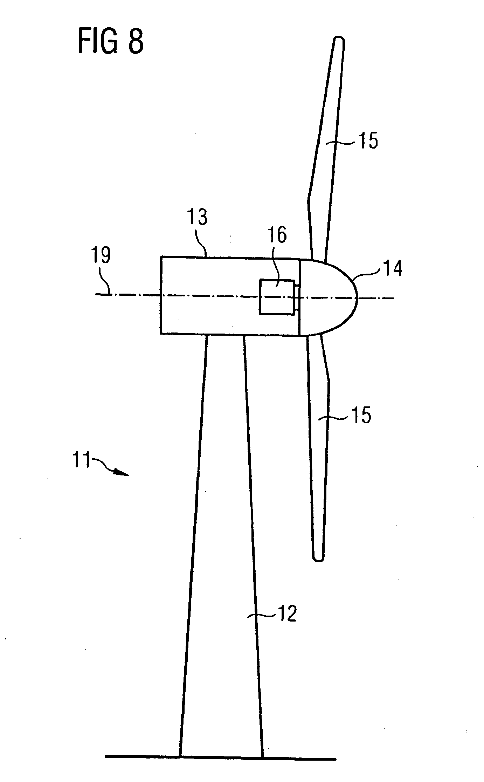

A second embodiment of the present invention will now be described with reference to figures 8 to 12. The features which are described in conjunction with the first embodiment can be combined with the features which will be described in the second embodiment.

Figure 8 schematically shows a wind turbine 11. The wind turbine 11 comprises a tower 12, a nacelle 13 and a hub 14. The nacelle 13 is located on top of the tower 12. The hub 14 comprises a number of wind turbine blades 15. The hub 14 is mounted to the nacelle 13. Moreover, the hub 14 is pivot-mounted such that it is able to rotate about a rotation axis 19. A generator 16 is located inside the nacelle 13. The wind turbine 11 is a direct drive wind turbine.

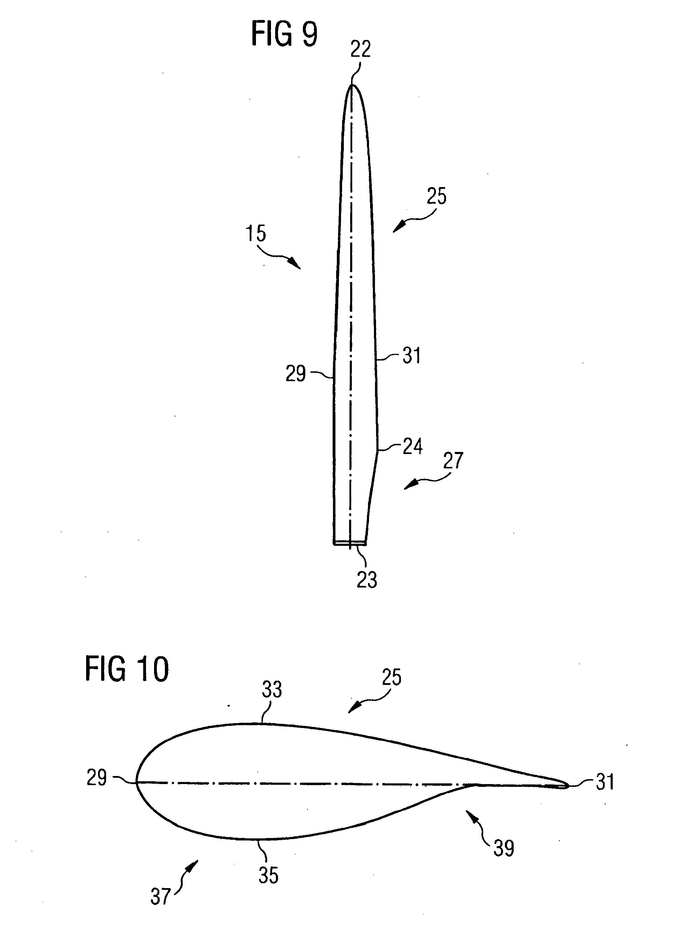

Figure 9 shows a wind turbine blade 15 as it is usually used in a three-blade rotor. However, the present invention shall not be limited to blades for three-blade rotors. In fact, it may as well be implemented in other rotors, e.g. one-blade rotors or two-blade rotors.

The rotor blade 15 shown in Figure 9 comprises a root 23 with a cylindrical profile and a tip 22. The tip 22 forms the outermost part of the blade 15. The cylindrical profile of the root 23 serves to fix the blade 15 to a bearing of the rotor hub 14. The rotor blade 15 further comprises a so-called shoulder 24 which is defined as the location of its maximum profile depth, i.e. the maximum chord length of the blade. Between the shoulder 24 and the tip 22 an airfoil portion 25 extends which has an aerodynamically shaped profile. Between the shoulder 24 and the cylindrical root 23, a transition portion 27 extends in which a transition takes place from the aerodynamic profile of the airfoil portion 25 to the cylindrical profile of the root 23.

A chord-wise cross section through the rotor blade's airfoil section 25 is shown in Figure 10. Their aerodynamic profile shown in Figure 10 comprises a convex suction side 33 and a less convex pressure side 35. The dash-dotted line extending from the blade's leading edge 29 to its trailing edge 21 shows the chord of the profile. Although the pressure side 35 comprises a convex section 37 and a concave section 39 in Figure 10, it may also be implemented without a concave section at all as long as the suction side 33 is more convex than the pressure side 35.

The suction side 33 and the pressure side 35 in the airfoil portion 25 will also be referred to as the suction side and the pressure side of the rotor blade 15, respectively, although, strictly spoken, the cylindrical portion 23 of the blade 15 does not show a pressure or a suction side.

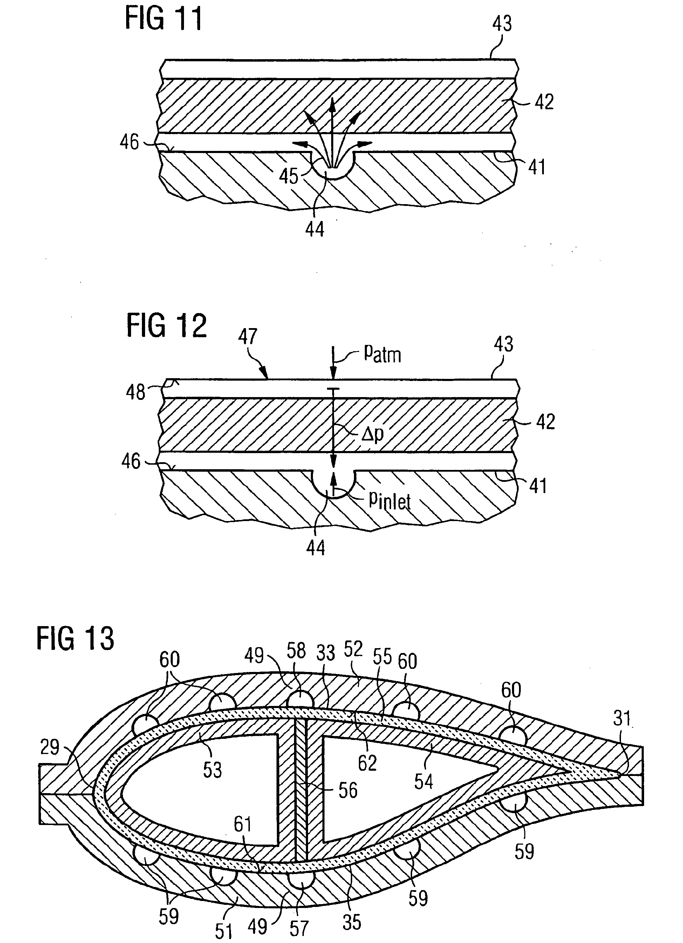

Figure 11 schematically shows the resin flowing from the inlet channel integrated in the mould through the laminated structure in a sectional view. In Figure 11 part of the mould 41 is shown in a sectional view. The mould 41 comprises an inner surface 46. A number of layers, for example fibre glass layers, forming a laminated structure 42 are placed onto the inner surface 46 of the mould 41. A vacuum bag 43 is placed onto the laminated structure 42. The vacuum bag 43 ensures that vacuum in the laminated structure 42 can be held.

An inlet channel 44 is integrated in the inner surface 46 of the mould 41. The inlet channel 44 is used to guide a matrix material, for example resin, to the laminated structure 42. The flow direction of the matrix material is indicated by arrows 45.

Figure 12 schematically shows part of the mould covered with a laminated structure and a vacuum bag in a sectional view. In Figure 12 the vacuum bag 43 comprises an outer side 47. On the outer side 47 of the vacuum bag 43 the pressure is atmospheric pressure pₐₜₘ. The matrix material, for example resin, is injected in the inlet channel 44 with an inlet pressure pᵢₙₗₑₜ. The resin can be injected with pressure higher than atmospheric pressure. Due to the "flow resistance" in the laminated structure 42, a pressure difference or pressure drop Δp across the structure will be present.

Generally it must be ensured that the vacuum bag 43 does not lump due to a resin or matrix material pressure at the inside surface 48 of the vacuum bag 43 that is higher than atmospheric pressure pₐₜₘ. Consequently, the maximal inlet pressure of the matrix material pᵢₙₗₑₜ that can be applied is: p_{inlet,max}=Pₐₜₘ+Δp which is a value higher than atmospheric pressure pₐₜₘ. This in turn ensures a higher inlet flow of matrix material or resin and therefore a shorter resin inlet time.

A third embodiment of the present invention will now be described with reference to figures 8 to 10, 13 and 14. The features which are described in conjunction with the previously described embodiments can be combined with the features which will be described in the present embodiment. Regarding the description of figures 8 to 10 it is here referred to the second embodiment.

Figure 13 schematically shows an inventive closed mould arrangement in a sectional view. The mould comprises a lower mould part 51 and an upper mould part 52. The lower mould part 51 comprises an inner surface 61. The upper mould part 52 comprises an inner surface 62. In the inner surface 61 of the lower mould part 51 a number of flow ducts or inlet channels 57, 59 are integrated. In the inner surface 62 of the upper mould part 52 a number of flow ducts or inlet channels 58, 60 are integrated. The flow ducts or inlet channels 58, 59, 57, 60 comprise openings towards an inner cavity formed by the lower mould part 51 and the upper mould part 52.

Onto the inner surfaces 61, 62 of the mould parts 51, 52 a laminated structure 55 comprising a number of layers, for example fibre glass layers, are placed. Onto the laminated structure 55 a first mould core part 53 is placed close to the leading edge 29 of the blade which will be manufactured. Moreover, a second mould core part 54 is paced onto the laminated structure 55 close to the trailing edge 31 of the blade which will be manufactured. Between the first mould core part 53 and the second mould core part 54 a shear web or main beam 56 is placed. The shear web 56 connects the suction side 33 of the blade with the pressure side 35 of the blade to increase the stability of the blade.

The upper mould part 52 and/or the lower mould part 51 comprises a shear web portion or main beam portion 49 which is located close to the position of the shear web or main beam 56. A central flow duct 57 integrated in the lower mould part 51 is located at the shear web portion or main beam portion 49, preferably centred under the shear web or main beam 56. Moreover, a central flow duct 58 which is integrated in the upper mould part 52 is located at the shear web portion or main beam portion 49, preferably centred over the shear web 56.

The idea is to compensate for the permeability in the laminated structure by alternating the position of the inlet of matrix material, for example resin. The resin inlet is integrated in the mould as e.g. a channel. The permeability may be dependent on the thickness of the glass fibre structure or laminated structure 55, the "density" of the glass fibres in the glass fibre structure 55 or other flow parameters. The central flow ducts or inlet channels 57, 58 are centred under or over the main beam or shear web since the beam area typically comprises additional glass fibre material in order to ensure a sufficient transition between the blade "shell" and the beam 56.

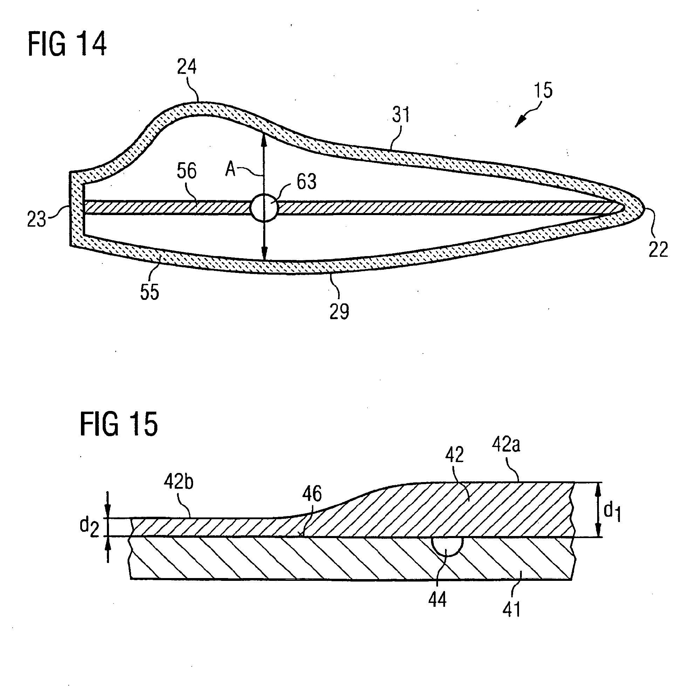

Figure 14 schematically shows a wind turbine rotor blade 15 in a sectional view along the plane defined by the blade's span and the blade's cord. Figure 14 shows a preferred position for an inlet point or inlet opening 63 in the inlet channel. The inlet point 63 is preferably placed in the corresponding mould approximately at 1/3 of the length from the root 23 to the tip 22 of the blade 15. This ensures that approximately half of the glass fibre material area is present on each side of the inlet point 63. This may in turn ensure a faster injection time, as the "operation length" from the inlet point 63 to an outlet is only "A/2", whereas a normal "operation length" is from the trailing edge 31 to the leading edge 29 of the blade 15, which is a length of A.

A fourth embodiment of the present invention will now be described with reference to figures 8 to 10 and 13 to 15. The features which are described in conjunction with the previously described embodiments can be combined with the features which will be described in the present embodiment. Regarding the description of figures 8 to 10 and 13 to 15 it is here referred to the second embodiment.

An advantageous positioning of the flow duct or inlet channel in the mould depending on the thickness and/or permeability of the layers or laminated structure will now be described with reference to figure 15. Figure 15 schematically shows part of a mould covered with a laminated structure in a sectional view.

In Figure 15 a number of layers or a laminated structure 42 are/is placed onto the inner surface 46 of the mould 41. The laminated structure 42 comprises a first portion 42a and a second portion 42b. In the first portion 42a the laminated structure 42 has a thickness d₁ and in the second portion 42b the laminated structure 42 has a thickness d₂. The thickness d₁ has a higher value than the thickness d₂. In other words, the laminated structure of the first portion 42a is thicker than the laminated structure in the second portion 42b. The flow duct or inlet channel 44 is integrated in the inner surface 46 of the mould 41 at a position where the laminated structure 42 has a high thickness d, which is at the position of the first portion 42a of the laminated structure. This compensates for a lower permeability p₁ in the first portion 42a of the laminated structure compared with a higher permeability p₂ in the second portion 42b of the laminated structure.

Placing the flow ducts or inlet channels 44 at positions of high thickness d or low permeability p of the laminated structure 42 ensures a fast and uniform dispersion of the matrix material throughout the laminated structure 42.

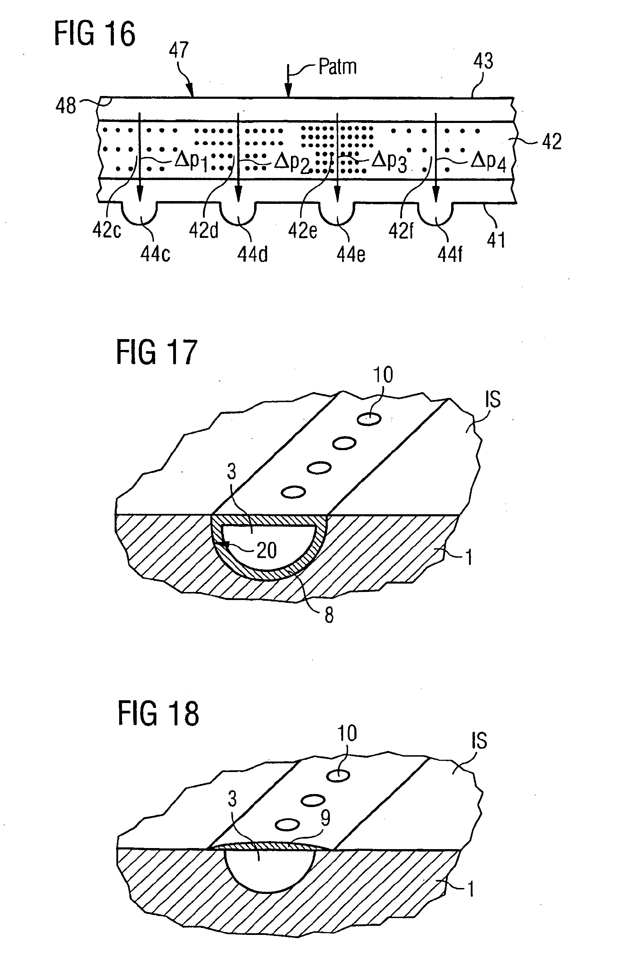

A fifth embodiment of the present invention will now be described with reference to figures 8 to 10, 13 and 16. The features which are described in conjunction with the previously described embodiments can be combined with the features which will be described in the present embodiment. Regarding the description of figures 8 to 10 and 13 it is here referred to the second embodiment.
In the present embodiment of the invention the mould comprises more than one inlet channel. Resin may be injected in each of these inlets at different pressures, dependent on which structure and which permeability the resin is facing. This is schematically illustrated in figure 16.

Figure 16 schematically shows a positioning of flow ducts depending on the permeability of the laminated structure in part of a mould in a sectional view. The laminated structure 42 comprises a first portion 42c with a first permeability, a second portion 42d with a second permeability, third portion 42e with a third permeability and a fourth portion 42f with a fourth permeability. The permeabilities differ from each other. A first inlet channel 44c is located adjacent to the first portion 42c. A second inlet channel 44d is located adjacent to the second portion 42d. A third inlet channel 44e is located adjacent to the third portion 42e. A fourth inlet channel 44f is located adjacent to the fourth portion 42f. The different pressure drops caused by the different permeabilities are indicated by Δp₁, Δp₂, Δp₃ and Δp_{4.}

Matrix material, for example resin, is injected in each of these inlet channels 44c to 44f at different pressures, dependent on which structure and which permeability the matrix material is facing. For example, the injection pressure in the first inlet channel 44c may be p₁ = pₐₜₘ + Δp₁, the injection pressure in the second inlet channel 44d may be p₂ = Pₐₜₘ + Δp₂, the injection pressure in the third inlet channel 44e may be p₃ = pₐₜₘ + Δp₃ and the injection pressure in the fourth inlet channel 44f may be p₄ = pₐₜₘ + Δ p₄.
Even further the pressure inside the mould cavity i.e. the "outside" of the bag 43 may for various embodiments of the invention, be different than atmospheric pressure such as higher, which ensures that the resin inlet pressure may be increased even further, which in turn ensures a higher resin flow and faster resin inlet time.

Figure 17 and figure 18 schematically show part of a flow duct equipped with a lining in a sectional perspective view. The flow ducts shown in figures 17 and 18 can be applied to all previously described embodiments.

In figure 17 a flow duct 3 which is integrated in the inner surface of a mould 1 is shown. The flow duct 3 comprises an inner surface 20. The inner surface 20 is covered with a lining 8. Furthermore, the flow duct 3 is closed by the lining 8 towards the inner surface IS of the mould 1. The lining 8 comprises a number of openings or holes 10. The holes 10 are located in a portion of the lining 8 which closes the flow duct 3 towards the inner surface IS of the mould 1. This means, that the holes 10 provide openings between the flow duct 3 and the inner surface IS of the mould 1.

In figure 17 a "full-body" lining which fits into the lining channel or flow duct 3 is shown, whereas in figure 18 a lining strip 9 which is positioned substantially on top of the flow channel or flow duct 3 is shown. In figure 18 the flow duct 3 is only covered or closed by means of a lining strip 9 towards the inner surface IS of the mould 1. As the mould 1 may be made of a material to which the resin does not adhere, the lining 9 does not necessary cover the sides or the inner surface 20 of the flow duct 3. The lining strip 9 in figure 18 comprises a number of openings or holes 10. The holes 10 in figure 18 have the same properties as the holes 10 of figure 17.

For both the variants shown in figures 17 and 18, the diameter of the holes may vary along the lining so as to regulate the flow of resin accordingly. Also the distance between the holes may vary for the same reasons.

## Claims

1. A mould (1, 41, 51, 52) for building up a blade (15), the mould (1, 41, 51, 52) comprising an inner surface (46) for supporting a number of layers (2, 42, 55) forming the blade (15) and at least one inlet (44) for injecting a matrix material which penetrates the layers (2, 42, 55) to build up the blade (15), the at least one inlet (44) being integrated into the inner surface (46) of the mould (1, 41, 51, 52),
**characterised in that**,
the mould (1, 41, 51, 52) comprises a first portion (42a) supporting a number of layers (2, 42, 55) with a total permeability for the matrix material p₁ and a second portion (42b) supporting a number of layers (2, 42, 55) with a total permeability for the matrix material p₂, the permeability p₂ being higher than the permeability p₁, and the inlet and/or a flow duct (3, 44, 57, 58, 59, 60) is located at the first portion (42a).

2. The mould (1, 41, 51, 52) as claimed in claim 1,
**characterised in that**,
the mould (1, 41, 51, 52) comprises at least one flow duct (44) for guiding the injected matrix material, the at least one flow duct (44) being integrated into the inner surface (46) of the mould (1, 41, 51, 52).

3. The mould (1, 41, 51, 52) as claimed in claim 1 or 2,
**characterised in that**
the mould (1, 41, 51, 52) comprises a main beam portion (49) for building up a main beam (56) of the blade (15) and at least one inlet and/or at least one flow duct (57, 58) is located at the main beam portion (49).

4. The mould (1, 41, 51, 52) as claimed in any of the claims 1 to 3,
**characterised in that**
the blade (15) comprises a root (23) and a tip (22) and the mould (1, 41, 51, 52) comprises a root end corresponding to the root (23) of the blade (15) and a tip end corresponding to the tip (22) of the blade (15), and the inlet (63) and/or the flow duct (3, 44, 57, 58, 59, 60) is located at a position along the length from the root end to the tip end of the mould (1, 41, 51, 52) of between 0.25 and 0.5 of the total blade length measured from the blade root (23).

5. A method for manufacturing a blade (15) comprising the steps of:
- arranging a number of layers (2, 42, 55) in a mould (1, 41, 51, 52) to form the blade (15),
- injecting matrix material into a laminated structure (42) formed by the layers (2, 42, 55) to build up the blade (15),
- injecting the matrix material through an inlet (44) which is partly integrated into an inner surface (IS, 46, 61, 62) of the mould (1, 41, 51, 52),
**characterised in that**,
the mould (1, 41, 51, 52) comprises a first portion (42a) supporting a number of layers (2, 42, 55) with a total permeability for the matrix material p₁ and a second portion (42b) supporting a number of layers (2, 42, 55) with a total permeability for the matrix material p₂, the permeability p₂ being higher than the permeability p₁, and the injected matrix material is injected through an inlet and/or guided through a flow duct(3, 44, 57, 58, 59, 60) which is located at the first portion (42a).

6. The method as claimed in claim 5,
**characterised in**
guiding the injected matrix material through a flow duct (3, 44, 57, 58, 59, 60) which is at least partly integrated into an inner surface (IS, 46, 61, 62) of the mould (1, 41, 51, 52).

7. The method as claimed in claim 5 or 6,
**characterised in that**
the mould (1, 41, 51, 52) comprises a main beam portion (49) for building up a main beam (56) of the blade (15) and the matrix material is injected through an inlet which is located at the main beam portion (49) and/or the matrix material is guided through a flow duct (3, 44, 57, 58, 59, 60) which is located at the main beam portion (49).

8. The method as claimed in any of the claims 5 to 7,
**characterised in that**
the blade (15) comprises a root (23) and a tip (22) and the mould (1, 41, 51, 52) comprises a root end corresponding to the root (23) of the blade (15) and a tip end corresponding to the tip (22) of the blade (15), and the matrix material is injected through an inlet at a position (63) along the length from the root end to the tip end of the mould (1, 41, 51, 52) of between 0.25 and 0.5 of the total blade length measured from the blade root (23) and/or the matrix material is injected in a flow duct (3, 44, 57, 58, 59, 60) at a position (63) along the length from the root end to the tip end of the mould (1, 41, 51, 52) of between 0.25 and 0.5 of the total blade length measured from the blade root (23).

9. The method as claimed in any of the claims 5 to 8,
**characterised in**
injecting matrix material with a pressure higher than atmospheric pressure pₐₜₘ.

10. The method as claimed in claim 9,
**characterised in**
injecting matrix material with a pressure between atmospheric pressure pₐₜₘ and a maximal pressure pₘₐₓ = pₐₜₘ + Δp, where Δp is the pressure drop across the laminated structure (42) formed by the number of layers (2, 42, 55).

11. The method as claimed in claim 5 to 10,
**characterised in**
injecting matrix material with a pressure depending on the local permeability of the laminated structure (42) formed by the number of layers (2, 42, 55) adjacent to the inlet and/or flow duct (3, 44, 57, 58, 59, 60).

12. The method as claimed in claim 11,
**characterised in that**
the mould comprises a number of inlets (3, 44, 57, 58, 59, 60) and/or a number of flow ducts (3, 44, 57, 58, 59, 60) and matrix material is injected through each inlet (3, 44, 57, 58, 59, 60) and/or guided through each flow duct (3, 44, 57, 58, 59, 60) with an individual pressure depending on the local permeability of the laminated structure (42) formed by the number of layers (2, 42, 55) adjacent to the inlet (3, 44, 57, 58, 59, 60) and/or flow duct (3, 44, 57, 58, 59, 60).

13. The method as claimed in any of the claims 5 to 12,
**characterised in that**
the mould (1, 41, 51, 52) comprises a first portion (42a) for supporting a number of layers (2, 42, 55) with a total permeability for the matrix material p₁ and a second portion (42b) for supporting a number of layers (2, 42, 55) with a total permeability for the matrix material p₂, the permeability p₂ being higher than the permeability p_{1;} and matrix material is injected with a first pressure a₁ through an inlet which is located at the first portion (42a), and matrix material is injected with a second pressure through an inlet which is located at the second portion (42b); the first pressure being higher than the second pressure.

14. The mould (1, 41, 51, 52) as claimed in any of the claims 1 to 4 or the method as claimed in any of the claims 5 to 13,
**characterised in that**
the flow duct (44) comprises a lining (8, 9).

15. The mould (1, 41, 51, 52) as claimed in any of the claims 1 to 4 or 14 or the method as claimed in any of the claims 5 to 13, wherein the blade (15) is a wind turbine rotor blade (15).

16. An arrangement to build up a blade (15) comprising a mould as claimed in any of the claims 1 to 4 or 14 or 15.

## Patentansprüche

1. Form (1, 41, 51, 52) zum Aufbauen eines Rotorblattes (15), wobei die Form (1, 41, 51, 52) eine Innenfläche (46) zum Stützen einer Anzahl von Schichten (2, 42, 55), die das Rotorblatt (15) bilden, und mindestens einen Einlass (44) zum Einspritzen eines Matrixmaterials, welches die Schichten (2, 42, 55) durchdringt, um das Rotorblatt (15) aufzubauen, umfasst, wobei der mindestens eine Einlass (44) in die Innenfläche (46) der Form (1, 41, 51, 52) integriert ist,
**dadurch gekennzeichnet, dass**
die Form (1, 41, 51, 52) einen ersten Abschnitt (42a), der eine Anzahl von Schichten (2, 42, 55) mit einer Gesamtdurchlässigkeit für das Matrixmaterial p₁ stützt, und einen zweiten Abschnitt (42b), der eine Anzahl von Schichten (2, 42, 55) mit einer Gesamtdurchlässigkeit für das Matrixmaterial p₂ stützt, umfasst, wobei die Durchlässigkeit p₂ höher als die Durchlässigkeit p₁ ist und der Einlass und/oder ein Strömungskanal (3, 44, 57, 58, 59, 60) an dem ersten Abschnitt (42a) angeordnet sind/ist.

2. Form (1, 41, 51, 52) nach Anspruch 1,
**dadurch gekennzeichnet, dass**
die Form (1, 41, 51, 52) mindestens einen Strömungskanal (44) zum Leiten des eingespritzten Matrixmaterials umfasst, wobei der mindestens eine Strömungskanal (44) in die Innenfläche (46) der Form (1, 41, 51, 52) integriert ist.

3. Form (1, 41, 51, 52) nach Anspruch 1 oder 2,
**dadurch gekennzeichnet, dass**
die Form (1, 41, 51, 52) einen Hauptträgerabschnitt (49) zum Aufbauen eines Hauptträgers (56) des Rotorblattes (15) umfasst und mindestens ein Einlass und/oder mindestens ein Strömungskanal (57, 58) an dem Hauptträgerabschnitt (49) angeordnet sind/ist.

4. Form (1, 41, 51, 52) nach einem der Ansprüche 1 bis 3,
**dadurch gekennzeichnet, dass**
das Rotorblatt (15) einen Fuß (23) und eine Spitze (22) umfasst und die Form (1, 41, 51, 52) ein Fußende, das dem Fuß (23) des Rotorblattes (15) entspricht, und ein Spitzenende, das der Spitze (22) des Rotorblattes (15) entspricht, umfasst, und der Einlass (63) und/oder der Strömungskanal (3, 44, 57, 58, 59, 60) an einer Position entlang der Länge vom Fußende bis zum Spitzenende der Form (1, 41, 51, 52) von zwischen 0,25 und 0,5 der vom Rotorblattfuß (23) aus gemessenen Gesamt-Rotorblattlänge angeordnet sind/ist.

5. Verfahren zur Herstellung eines Rotorblattes (15), welches die folgenden Schritte umfasst:
- Anordnen einer Anzahl von Schichten (2, 42, 55) in einer Form (1, 41, 51, 52), um das Rotorblatt (15) zu formen,
- Einspritzen von Matrixmaterial in eine laminierte Struktur (42), die von den Schichten (2, 42, 55) gebildet wird, um das Rotorblatt (15) aufzubauen,
- Einspritzen des Matrixmaterials durch einen Einlass (44), welcher teilweise in eine Innenfläche (IS, 46, 61, 62) der Form (1, 41, 51, 52) integriert ist,
**dadurch gekennzeichnet, dass**
die Form (1, 41, 51, 52) einen ersten Abschnitt (42a), der eine Anzahl von Schichten (2, 42, 55) mit einer Gesamtdurchlässigkeit für das Matrixmaterial p₁ stützt, und einen zweiten Abschnitt (42b), der eine Anzahl von Schichten (2, 42, 55) mit einer Gesamtdurchlässigkeit für das Matrixmaterial p₂ stützt, umfasst, wobei die Durchlässigkeit p₂ höher als die Durchlässigkeit p₁ ist und das eingespritzte Material durch einen Einlass eingespritzt und/oder durch einen Strömungskanal (3, 44, 57, 58, 59, 60) geleitet wird, welcher an dem ersten Abschnitt (42a) angeordnet ist.

6. Verfahren nach Anspruch 5,
**gekennzeichnet durch**
Leiten des eingespritzten Matrixmaterials **durch** einen Strömungskanal (3, 44, 57, 58, 59, 60), welcher wenigstens teilweise in eine Innenfläche (IS, 46, 61, 62) der Form (1, 41, 51, 52) integriert ist.

7. Verfahren nach Anspruch 5 oder 6,
**dadurch gekennzeichnet, dass**
die Form (1, 41, 51, 52) einen Hauptträgerabschnitt (49) zum Aufbauen eines Hauptträgers (56) des Rotorblattes (15) umfasst und das Matrixmaterial durch einen Einlass eingespritzt wird, welcher an dem Hauptträgerabschnitt (49) angeordnet ist, und/oder das Matrixmaterial durch einen Strömungskanal (3, 44, 57, 58, 59, 60) geleitet wird, welcher an dem Hauptträgerabschnitt (49) angeordnet ist.

8. Verfahren nach einem der Ansprüche 5 bis 7,
**dadurch gekennzeichnet, dass**
das Rotorblatt (15) einen Fuß (23) und eine Spitze (22) umfasst und die Form (1, 41, 51, 52) ein Fußende, das dem Fuß (23) des Rotorblattes (15) entspricht, und ein Spitzenende, das der Spitze (22) des Rotorblattes (15) entspricht, umfasst, und das Matrixmaterial durch einen Einlass an einer Position (63) entlang der Länge vom Fußende bis zum Spitzenende der Form (1, 41, 51, 52) von zwischen 0,25 und 0,5 der vom Rotorblattfuß (23) aus gemessenen Gesamt-Rotorblattlänge eingespritzt wird und/oder das Matrixmaterial in einem Strömungskanal (3, 44, 57, 58, 59, 60) an einer Position (63) entlang der Länge vom Fußende bis zum Spitzenende der Form (1, 41, 51, 52) von zwischen 0,25 und 0,5 der vom Rotorblattfuß (23) aus gemessenen Gesamt-Rotorblattlänge eingespritzt wird.

9. Verfahren nach einem der Ansprüche 5 bis 8,
**gekennzeichnet durch**
Einspritzen von Matrixmaterial mit einem Druck, der höher als der atmosphärische Druck pₐₜₘ ist.

10. Verfahren nach Anspruch 9,
**gekennzeichnet durch**
Einspritzen von Matrixmaterial mit einem Druck zwischen dem atmosphärischen Druck pₐₜₘ und einem maximalen Druck pₘₐₓ = Pₐₜₘ + Δp, wobei Δp der Druckabfall über der **durch** die Anzahl von Schichten (2, 42, 52) gebildeten laminierten Struktur (42) ist.

11. Verfahren nach Anspruch 5 bis 10,
**gekennzeichnet durch**
Einspritzen von Matrixmaterial mit einem Druck, der von der lokalen Durchlässigkeit der **durch** die Anzahl von Schichten (2, 42, 55) gebildeten laminierten Struktur (42) abhängt, die dem Einlass und/oder Strömungskanal (3, 44, 57, 58, 59, 60) benachbart ist.

12. Verfahren nach Anspruch 11,
**dadurch gekennzeichnet, dass**
die Form eine Anzahl von Einlässen (3, 44, 57, 58, 59, 60) und/oder eine Anzahl von Strömungskanälen (3, 44, 57, 58, 59, 60) umfasst und Matrixmaterial mit einem individuellen Druck durch jeden Einlass (3, 44, 57, 58, 59, 60) eingespritzt und/oder durch jeden Strömungskanal (3, 44, 57, 58, 59, 60) geleitet wird, der von der lokalen Durchlässigkeit der durch die Anzahl von Schichten (2, 42, 55) gebildeten laminierten Struktur (42) abhängt, die dem Einlass (3, 44, 57, 58, 59, 60) und/oder Strömungskanal (3, 44, 57, 58, 59, 60) benachbart ist.

13. Verfahren nach einem der Ansprüche 5 bis 12,
**dadurch gekennzeichnet, dass**
die Form (1, 41, 51, 52) einen ersten Abschnitt (42a) zum Stützen einer Anzahl von Schichten (2, 42, 55) mit einer Gesamtdurchlässigkeit für das Matrixmaterial p₁ und einen zweiten Abschnitt (42b) zum Stützen einer Anzahl von Schichten (2, 42, 55) mit einer Gesamtdurchlässigkeit für das Matrixmaterial p₂ umfasst, wobei die Durchlässigkeit p₂ höher als die Durchlässigkeit p₁ ist und Matrixmaterial mit einem ersten Druck a₁ durch einen Einlass eingespritzt wird, welcher an dem ersten Abschnitt (42a) angeordnet ist, und Matrixmaterial mit einem zweiten Druck durch einen Einlass eingespritzt wird, welcher an dem zweiten Abschnitt (42b) angeordnet ist; wobei der erste Druck höher als der zweite Druck ist.

14. Form (1, 41, 51, 52) nach einem der Ansprüche 1 bis 4 oder Verfahren nach einem der Ansprüche 5 bis 13,
**dadurch gekennzeichnet, dass**
der Strömungskanal (44) eine Auskleidung (8, 9) umfasst.

15. Form (1, 41, 51, 52) nach einem der Ansprüche 1 bis 4 oder 14 oder Verfahren nach einem der Ansprüche 5 bis 13, wobei das Rotorblatt (15) ein Windenergieanlagen-Rotorblatt ist.

16. Anordnung zum Aufbauen eines Rotorblattes (15), welche eine Form nach einem der Ansprüche 1 bis 4 oder 14 oder 15 umfasst.

## Revendications

1. Moule (1, 41, 51, 52) permettant de réaliser une pale (15), le moule (1, 41, 51, 52) comprenant une surface intérieure (46) supportant un certain nombre de couches (2, 42, 55) formant la pale (15) et au moins une entrée (44) permettant d'injecter un matériau de matrice qui pénètre les couches (2, 42, 55) afin de réaliser la pale (15), la au moins une entrée (44) étant intégrée dans la surface intérieure (46) du moule (1, 41, 51, 52),
**caractérisé en ce que**,
le moule (1, 41, 51, 52) comprend une première partie (42a) supportant un certain nombre de couches (2, 42, 55) avec une perméabilité totale au matériau de matrice p₁ et une seconde partie (42b) supportant un certain nombre de couches (2, 42, 55) avec une perméabilité totale au matériau de matrice p₂, la perméabilité p₂ étant supérieure à la perméabilité p₁, et l'entrée et/ou une conduite d'écoulement (3, 44, 57, 58, 59, 60) est située au niveau de la première partie (42a).

2. Moule (1, 41, 51, 52) selon la revendication 1, **caractérisé en ce que**
le moule (1, 41, 51, 52) comprend au moins une conduite d'écoulement (44) permettant de guider le matériau de matrice injecté, le au moins un conduit d'écoulement (44) étant intégré dans la surface intérieure (46) du moule (1, 41, 51, 52).

3. Moule (1, 41, 51, 52) selon la revendication 1 ou 2,
**caractérisé en ce que**
le moule (1, 41, 51, 52) comprend une partie longeron (49) permettant de réaliser un longeron (56) de la pale (15) et au moins une entrée et/ou au moins une conduite d'écoulement (57, 58) est située au niveau de la partie longeron (49).

4. Moule (1, 41, 51, 52) selon l'une quelconque des revendications 1 à 3, **caractérisé en ce que**
la pale (15) comprend une emplanture (23) et un bout (22) et le moule (1, 41, 51, 52) comprend une extrémité d'emplanture correspondant à l'emplanture (23) de la pale (15) et une extrémité de bout correspondant au bout (22) de la pale (15), et l'entrée (63) et/ou la conduite d'écoulement (3, 44, 57, 58, 59, 60) est/sont située(s) au niveau d'un emplacement situé le long de la longueur allant de l'extrémité d'emplanture à l'extrémité de bout du moule (1, 41, 51, 52) entre 0,25 et 0,5 de la longueur totale de pale mesurée à partir de l'emplanture de pale (23).

5. Procédé de fabrication d'une pale (15) comprenant les étapes consistant à :
- agencer un certain nombre de couches (2, 42, 55) dans un moule (1, 41, 51, 52) afin de former la pale (15),
- injecter du matériau de matrice dans une structure stratifiée (42) formée par les couches (2, 42, 55) afin de réaliser la pale (15),
- injecter le matériau de matrice à travers une entrée (44) qui est partiellement intégrée dans une surface intérieure (IS, 46, 61, 62) du moule (1, 41, 51, 52),
**caractérisé en ce que**,
le moule (1, 41, 51, 52) comprend une première partie (42a) supportant un certain nombre de couches (2, 42, 55) avec une perméabilité totale au matériau de matrice p₁ et une seconde partie (42b) supportant un certain nombre de couches (2, 42, 55) avec une perméabilité totale au matériau de matrice p₂, la perméabilité p₂ étant supérieure à la perméabilité p₁, et le matériau de matrice injecté est injecté à travers une entrée et/ou guidé à travers une conduite d'écoulement (3, 44, 57, 58, 59, 60) qui est située au niveau de la première partie (42a).

6. Procédé selon la revendication 5, **caractérisé en ce qu'**il comprend une étape consistant à
guider le matériau le matrice injecté à travers une conduite d'écoulement (3, 44, 57, 58, 59, 60) qui est au moins partiellement intégrée dans une surface intérieure (IS, 46, 61, 62) du moule (1, 41, 51, 52).

7. Procédé selon la revendication 5 ou 6,
**caractérisé en ce que**
le moule (1, 41, 51, 52) comprend une partie longeron (49) permettant de réaliser un longeron (56) de la pale (15) et le matériau de matrice est injecté à travers une entrée qui est située au niveau de la partie longeron (49) et/ou le matériau de matrice est guidé à travers une conduite d'écoulement (3, 44, 57, 58, 59, 60) qui est située au niveau de la partie longeron (49).

8. Procédé selon l'une quelconque des revendications 5 à 7,
**caractérisé en ce que**
la pale (15) comprend une emplanture (23) et un bout (22) et le moule (1, 41, 51, 52) comprend une extrémité d'emplanture correspondant à l'emplanture (23) de la pale (15) et une extrémité de bout correspondant au bout (22) de la pale (15), et le matériau de matrice est injecté à travers une entrée au niveau d'un emplacement (63) situé le long de la longueur allant de l'extrémité d'emplanture à l'extrémité de bout du moule (1, 41, 51, 52) entre 0,25 et 0,5 de la longueur totale de pale mesurée à partir de l'emplanture de pale (23) et/ou le matériau de matrice est injecté dans une conduite d'écoulement (3, 44, 57, 58, 59, 60) au niveau d'un emplacement (63) situé le long de la longueur allant de l'extrémité d'emplanture à l'extrémité de bout du moule (1, 41, 51, 52) entre 0,25 et 0,5 de la longueur totale de pale mesurée à partir de l'emplanture de pale (23).

9. Procédé selon l'une quelconque des revendications 5 à 8, **caractérisé en ce qu'**il comprend une étape consistant à injecter du matériau de matrice avec une pression supérieure à la pression atmosphérique pₐₜₘ.

10. Procédé selon la revendication 9,
**caractérisé en ce qu'**il comprend une étape consistant à injecter du matériau de matrice avec une pression comprise entre une pression atmosphérique pₐₜₘ et une pression maximale pₘₐₓ = pₐₜₘ + Δp, Δp correspondant à la baisse de pression intervenant dans la structure stratifiée (42) formée par le certain nombre de couches (2, 42, 55).

11. Procédé selon l'une quelconque des revendications 5 à 10,
**caractérisé en ce qu'**il comprend une étape consistant à injecter du matériau de matrice avec une pression dépendant de la perméabilité locale de la structure stratifiée (42) formée par le certain nombre de couches (2, 42, 55) adjacentes à l'entrée et/ou à la conduite d'écoulement (3, 44, 57, 58, 59, 60).

12. Procédé selon la revendication 11,
**caractérisé en ce que**
le moule comprend un certain nombre d'entrées (3, 44, 57, 58, 59, 60) et/ou un certain nombre de conduites d'écoulement (3, 44, 57, 58, 59, 60) et du matériau de matrice est injecté à travers chaque entrée (3, 44, 57, 58, 59, 60) et/ou guidé à travers chaque conduite d'écoulement (3, 44, 57, 58, 59, 60) avec une pression individuelle dépendant de la perméabilité locale de la structure stratifiée (42) formée par le certain nombre de couches (2, 42, 55) adjacentes à l'entrée (3, 44, 57, 58, 59, 60) et/ou à la conduite d'écoulement (3, 44, 57, 58, 59, 60).

13. Procédé selon l'une quelconque des revendications 5 à 12,
**caractérisé en ce que**
le moule (1, 41, 51, 52) comprend une première partie (42a) permettant de supporter un certain nombre de couches (2, 42, 55) avec une perméabilité totale au matériau de matrice p₁ et une seconde partie (42b) permettant de supporter un certain nombre de couches (2, 42, 55) avec une perméabilité totale au matériau de matrice p₂, la perméabilité p₂ étant supérieure à la perméabilité p₁, et du matériau de matrice est injecté avec une première pression a₁ à travers une entrée qui est située au niveau de la première partie (42a), et du matériau de matrice est injecté avec une seconde pression à travers une entrée qui est située au niveau de la seconde partie (42b) ; la première pression étant supérieure à la seconde pression.

14. Moule (1, 41, 51, 52) selon l'une quelconque des revendications 1 à 4 ou procédé selon l'une quelconque des revendications 5 à 13,
**caractérisé en ce que**
la conduite d'écoulement (44) comprend un revêtement (8, 9).

15. Moule (1, 41, 51, 52) selon l'une quelconque des revendications 1 à 4 ou 14 ou procédé selon l'une quelconque des revendications 5 à 13, dans lequel la pale (15) est une pale de rotor d'éolienne (15).

16. Agencement permettant de réaliser une pale (15), comprenant un moule selon l'une quelconque des revendications 1 à 4 ou 14 ou 15.
